# EUROPÄISCHE PATENTSCHRIFT

(11) **EP 0 939 220 B1**
(45) Veröffentlichungstag und Bekanntmachung des Hinweises auf die Patenterteilung: **12.11.2003**
(21) Anmeldenummer: 98810157.2
(22) Anmeldetag: 26.02.1998
(51) Int. Cl.: F02M 63/02, F23K 5/18, F02C 7/232

(54) **Verfahren zum sicheren Entfernen von Flüssigbrennstoff aus dem Brennstoffsystem einer Gasturbine sowie Vorrichtung zur Durchführung des Verfahrens**
Method for safely removing liquid fuel out of a gas turbine fuel system and device for carrying out the method
Procédé sans danger d'extraction de carburant liquide d'un systeme d'alimentation de turbine à gaz et dispositif de mise en oeuvre du procédé

(43) Veröffentlichungstag der Anmeldung: 01.09.1999
(73) Patentinhaber: ALSTOM (Switzerland) Ltd, 5401 Baden (CH)
(72) Erfinder: Döbbeling, Klaus, Dr., 5210 Windisch (CH); Engelbrecht, Geoffrey, 5408 Ennetbaden (CH); Magni, Fulvio, 5415 Nussbaumen (CH); Müller, Gerhard, 5430 Wettingen (CH)

(56) Entgegenhaltungen:
- EP-A- 0 724 115
- US-A- 2 015 995
- US-A- 2 038 998
- US-A- 3 901 025
- US-A- 4 032 091
- US-A- 4 391 241
- PATENT ABSTRACTS OF JAPAN vol. 009, no. 135 (M-386), 11.Juni 1985 & JP 60 017626 A (HITACHI SEISAKUSHO KK), 29.Januar 1985,

## Beschreibung

### TECHNISCHES GEBIET

Die vorliegende Erfindung bezieht sich auf das Gebiet Gasturbinentechnik. Sie betrifft ein Verfahren zum sicheren Entfernen von Flüssigbrennstoff aus dem Brennstoffsystem einer Gasturbine nach dem Abstellen derselben, bei welchem Brennstoffsystem im Normalbetrieb der Gasturbine Flüssigbrennstoff über wenigstens eine erste Zubringerleitung einem Brenner zugeführt und dort über Brennstoffdüsen in eine Brennkammer eingedüst wird. Sie betrifft weiterhin eine Vorrichtung zur Durchführung des Verfahrens.

### STAND DER TECHNIK

*Stationäre* Gasturbinen werden zunehmend mit Mehrfachbrennersystemen ausgerüstet. Die flüssigen Brennstoffe werden dabei unter Verwendung komplexer Zerstäuberdüsen in die Brennersysteme eingedüst. Im Rahmen der Bestrebungen, die Verbrennungsqualität bezüglich der Emissionen und des Wirkungsgrades zu optimieren, müssen diese bei modernen Gasturbinenzerstäubern immer höheren Qualitätsanforderungen bezüglich der Sprayqualität genügen. Stationäre Gasturbinen werden mit einem weiten Bereich von Flüssigbrennstoffqualitäten betrieben. Diese Brennstoffe, z.B. Heizöl der Qualität "extraleicht", neigen beim Verdampfen zur Bildung von Rückständen (Verkokung).

Wird eine mit Flüssigbrennstoff betriebene Gasturbine abgestellt, erwärmen sich die Brennstoffeinspritzsysteme über den konvektiven Wärmefluss des umgebenden Materials soweit, dass es zur Bildung von solchen Rückständen kommen kann, sofern die im Bereich des thermischen Blockes liegenden Brennstoffsysteme nicht vollkommen vom Brennstoff entleert wurden. Diese harten Rückstände verschlechtern die Zerstäuberqualität in einem nicht zulässigen Masse und führen zu steigenden Durchflusswiderständen der Düsen. Im fortgeschrittenen Stadium der Rückstandsbildung kann die Gasturbine nicht mehr betrieben werden.

Insbesondere aus der Luftfahrzeugtechnik sind Spülsysteme für Brennstoffleitungen bekannt. Stellvertretend beschreibt die Druckschrift US 4032091 ein solches System, welches im Gefahrenfalle die Brennstoffzufuhr vom Tank unterbricht und die Leitung spült. Zwischen Brennstofftank und Turbinentriebwerk ist die Brennstoffleitung mit einem Einspeisepunkt für ein inertes Spülmedium, beispielsweise CO₂, ausgerüstet. Stromauf des Einspeisepunktes nahe am Tank befindet sich ein Ventil zur Sperrung der Brennstoffzufuhr und stromab vor dem Triebwerk ein Mehrwegeventil, welches die Zufuhr zum Triebwerk absperrt und dafür eine Leitung in die Atmosphäre freigibt. Bei Aktivierung des Systems werden Tank und Triebwerk von der Brennstoffleitung abgeschnitten und durch schlagartige Einleitung des Spülmediums unter hohem Druck das Brennstoffvolumen in die Atmosphäre ausgeblasen.

Dieses System ist in erster Linie auf die Sicherheitserfordernisse eines Luftfahrzeugs ausgerichtet; in möglichst kurzer Zeit sollen die Brennstoffleitungen, insbesondere im Passagierbereich, freigeblasen sein.
Demgegenüber erfordern stationäre Gasturbinen nicht ein rasches Ausblasen einer Brennstoffmenge zur Vermeidung von Gefahrenzuständen, sondern eine möglichst gründliche Reinigung der Leitung, um die Gefahr von Ablagerungen verkokender Rückstände sicher auszuschliessen.

Die Druckschrift JP 60017626 lehrt ein Verfahren zum Spülen einer Brennstoffleitung mittels Dampf aus einem Abhitzedampferzeuger. Dabei wird das Brennstoffvolumen der Leitung über den Brenner in die Brennkammer eingeleitet. Dadurch wird sichergestellt, dass keine Rückstände im Bereich des thermischen Blocks verbleiben und in diesem Bereich Koksablagerungen bilden und damit die Brennstoffdüsen verstopfen.
Indem der gesamte Flüssigbrennstoffanteil über den Brenner ausgespült wird, besteht allerdings die Gefahr, dass es im Abgastrakt zur Bildung explosionsfähiger Gemische kommt. Darüber hinaus ist es nicht ausgeschlossen, dass nach dem Abschalten des Spüldampfs Brennstoff aus dem Gebiet vor dem Einspeisepunkt in bereits gereinigte Bereiche nachläuft.

Um die beschriebenen Probleme zu vermeiden, muss der Flüssigbrennstoff nach dem Abstellen der Gasturbine in einem kontrollierten Prozess aus dem Brennstoffsystem entfernt werden.

### DARSTELLUNG DER ERFINDUNG

Es ist daher Aufgabe der Erfindung, ein Verfahren und eine Vorrichtung anzugeben, mit welchen der verbleibende Flüssigbrennstoff unter Verwendung eines inerten Hilfsmediums aus dem Brennstoffsystem einer abgeschalteten Gasturbine sicher entfernt wird, und damit Verkokungen in den Brennern und die Bildung von explosionsfähigen Luft-Brennstoff-Gemischen im Abgastrakt der Gasturbine vermieden werden können.

Erfindungsgemäss wird die Aufgabe gelöst durch ein Verfahren zum sicheren Entfernen von Flüssigbrennstoff aus dem Brennstoffsystem einer Gasturbine nach dem Abstellen derselben, bei welchem Brennstoffsystem im Normalbetrieb der Gasturbine Flüssigbrennstoff über wenigstens eine erste Zubringerleitung einem Brenner zugeführt und dort über Brennstoffdüsen in eine Brennkammer eingedüst wird, wobei der Flüssigbrennstoff unter Verwendung eines inerten Hilfsmediums aus dem Brennstoffsystem herausgespült wird, und wobei mit dem Abschalten der Gasturbine die Zufuhr von Flüssigbrennstoff über die erste Zubringerleitung an einer Unterbrechungsstelle in der ersten Zubringerleitung unterbrochen wird, und dass das Hilfsmedium über eine zweite Zubringerleitung an einem zwischen der Unterbrechungsstelle und dem Brenner befindlichen Einspeisepunkt in die erste Zubringerleitung eingespeist wird, das sich dadurch auszeichnet, dass in einem ersten Schritt mittels des am Einspeisepunkt eingespeisten Hilfsmediums der zwischen Einspeisepunkt und Brennstoffdüsen im Brennstoffsystem befindliche Flüssigbrennstoff über die Brennstoffdüsen in die Brennkammer gespült wird, und dass in einem zweiten Schritt Flüssigbrennstoff, welcher sich in Strömungsrichtung vor dem Einspeisepunkt in der ersten Zubringerleitung befindet, mittels des am Einspeisepunkt eingespeisten Hilfsmediums über einen separaten Auslass aus der ersten Zubringerleitung herausgespült wird.

Die mit der Erfindung einhergehenden Vorteile liegen darin, dass durch das erfindungsgemässe Herausspülen das Entfernen des verbleibenden Flüssigbrennstoffes auf einfache und gut kontrollierbare Weise durchgeführt werden kann. Insbesondere können auch geringe Reste des Brennstoffs, wie zum Beispiel Oberflächenfilme, schnell und sicher aus dem Brennstoffsystem entfernt werden.
Durch die Einspeisung an einem speziellen Einspeisepunkt der Zubringerleitung ist es möglich, mit dem Spülen sehr nahe am Brenner anzusetzen. Dadurch kann derjenige Flüssigbrennstoffanteil, der über den Brenner ausgespült werden muss, und der zu explosionsfähigen Gemischen im Abgastrakt führen kann, gering gehalten werden.
Durch den ersten Schritt kann der zur Verkokung neigende Flüssigbrennstoff im Bereich des Brenners auf einfache Weise und ohne weitere konstruktive Massnahmen am Brenner- und Brennstoffsystem vollständig entfernt werden. Durch den zweiten Schritt wird verhindert, dass Flüssigbrennstoff aus den weiter stromaufwärts liegenden Abschnitten der Zubringerleitung in schon gereinigte Lanzen oder Düsen des Brenners nachläuft.

Der erste Schritt, d.h. das Ausspülen des Brennstoffes in die Brennkammer wird vorzugsweise in zwei Spülvorgänge unterteilt, so dass in einem ersten Niederdruckspülvorgang der grösste Teil des Flüssigbrennstoffs in die Brennkammer entleert wird, wobei das Hilfsmedium den Flüssigbrennstoff aus den betroffenen Leitungen verdrängt und nur Restmengen des Flüssigbrennstoffes, insbesondere in Form von Oberflächenfilmen, übrigbleiben, dass in einem zweiten Hochdruckspülvorgang die verbliebenen Restmengen des Flüssigbrennstoffes entfernt werden, und dass für den Niederdruckspülvorgang und den Hochdruckspülvorgang jeweils ein definierter Volumenstrom des Hilfsmediums verwendet wird, wobei der Volumenstrom beim Hochdruckspülvorgang grösser ist, als der Volumenstrom beim Niederdruckspülvorgang.

Mit dem Niederdruckspülvorgang wird der Hauptteil des Brennstoffes langsam und unter kontrollierten Bedingungen entleert. Die Dauer des Niederdruckspülvorganges ist dabei so zu wählen, dass der Grossteil des Brennstoffes mit sehr niedrigem Impuls aus den Brennstoffdüsen entfernt wird. Lediglich geringe Restmengen von Brennstoff in den Totwasserräumen der Lanze oder als Film auf den Materialoberflächen können wegen der mit dem geringen Volumenstrom verbundenen kleinen Scherkräfte zurückbleiben. Mit dem Hochdruckspülvorgang werden die Brennerlanzen komplett gereinigt. Dazu wird der Arbeitsdruck und damit der Volumenstrom des Hilfs- bzw. Spülmediums soweit gesteigert, bis der Brennstoff- bzw. Oelfilm restlos von den Düsenoberflächen entfernt und alle Totwassergebiete vollkommen vom Brennstoff befreit und damit alle Verkokungsrisiken beseitigt sind.

Da beim Niederdruckspülvorgang die Hauptmenge des Flüssigbrennstoffs in die Brennkammer entleert wird und im Hinblick auf eine Explosionsgefahr unschädlich gemacht werden muss, wird gemäss einer bevorzugten Weiterbildung der Ausführungsform der Erfindung während des Niederdruckspülvorgangs Luft durch die Brennkammer geschickt und das Verhältnis von Brennstoff zu Luft in der Brennkammer unter der Lösch- bzw. mageren Zündgrenze gehalten. Dadurch kann eine Explosion sicher vermieden werden. Zum Einspeisen der Luft in die Brennkammer wird dabei entweder die Auslaufphase der Gasturbine benutzt, oder die Gasturbine mit eingeschalteter Anfahrvorrichtung, vorzugsweise bei einer definierten Ventilierungsdrehzahl, betrieben.

Die erfindungsgemässe Vorrichtung zur Durchführung des Verfahrens, welche ein Brennstoffsystem für eine Gasturbine mit wenigstens einer ersten Zubringerleitung umfasst, über welche der Flüssigbrennstoff zum Brenner der Gasturbine geleitet und in die Brennkammer eingedüst wird, und weiterhin eine zweite Zubringerleitung für ein inertes Hilfsmedium umfasst, welche an einem Einspeisepunkt mit der ersten Zubringerleitung verbunden ist, zeichnet sich dadurch aus, dass in Strömungsrichtung vor dem Einspeisepunkt an der ersten Zubringerleitung ein separater Auslass vorgesehen ist.

Eine erste bevorzugte Ausführungsform der Vorrichtung nach der Erfindung ist dadurch gekennzeichnet, dass der Auslass eine Drainageleitung mit einem Drainageventil umfasst, wobei die Drainageleitung zu einem Leckageöltank führt.

Hierdurch kann auf sehr einfache Weise ein Nachlaufen des Brennstoffs und eine Verunreinigung des Abgastrakts durch Restbrennstoff verhindert werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
Fig. 1 das Leitungsschema eines bevorzugten Ausführungsbeispiels der Vorrichtung nach der Erfindung; und
Fig. 2 das Ablaufschema für einen Spülvorgang mit einer Vorrichtung nach Fig. 1 gemäss einem bevorzugten Ausführungsbeispiels des erfindungsgemässen Verfahrens.

### WEGE ZUR AUSFÜHRUNG DER ERFINDUNG

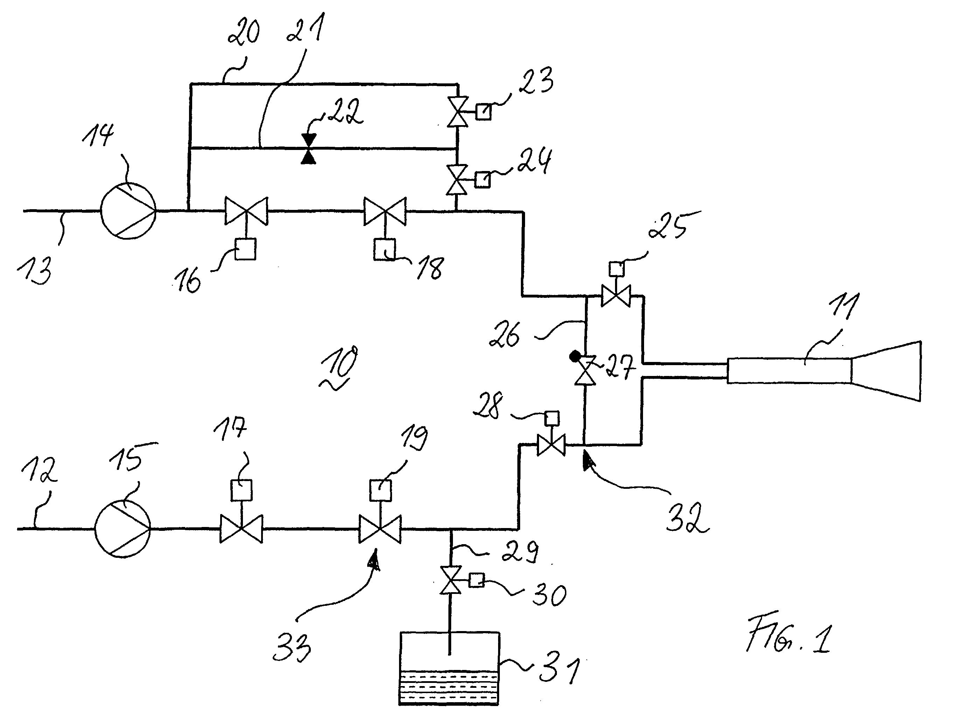

In Fig. 1 ist das Leitungsschema eines bevorzugten Ausführungsbeispiels der Vorrichtung nach der Erfindung wiedergegeben. Das Brennstoffsystem 10 des Brenners 11 (mit Brennerlanze, Düsen und dgl.) einer Gasturbine umfasst zwei Zubringerleitungen 12 und 13. Ueber die erste Zubringerleitung 12 wird dem Brenner 11 Flüssigbrennstoff zugeführt. Dazu ist in der ersten Zubringerleitung eine Pumpe 15 vorgesehen. Hinter der Pumpe 15 sind in der ersten Zubringerleitung 12 in an sich bekannter Weise ein Schnellabschaltventil 17 und ein Steuerventil 19 zur Steuerung des Brennstoffvolumenstromes angeordnet. Das Steuerventil 19 markiert zugleich in der Zubringerleitung 12 eine Unterbrechungsstelle 33, an welcher beim Abschalten der Gasturbine der Brennstoffluss unterbrochen wird. Hinter dem Steuerventil 19 verläuft die Zubringerleitung 12 über ein (optional vorhandenes) Sektorventil 28 zum Brenner 11 bzw. der (nicht eingezeichneten) Brennstofflanze.

Parallel zur ersten Zubringerleitung 12 ist eine zweite Zubringerleitung 13 vorhanden, die ebenfalls mit einer Pumpe 14 ausgerüstet ist, und ebenfalls über ein Schnellabschaltventil 16, ein Steuerventil 18 und ein Sektorventil 25 zum Brenner 11 führt. Ueber die zweite Zubringerleitung 13 kann bei Bedarf zur Verringerung der NOx-Werte dem Brenner 11 Wasser zugeführt und in die Verbrennungszone eingespritzt werden. Die zweite Zubringerleitung 13 kann nun mit Vorteil zum Spülen der ersten Zubringerleitung 12 bzw. des Brennstoffsystems 10 verwendet werden. Dazu sind zwei Modifikationen vorgesehen: Zum einen sind kurz vor dem Brenner 11 die beiden Zubringerleitungen 12 und 13 durch eine Verbindungsleitung 26 miteinander verbunden, die durch ein Rückschlagventil 27 (oder Ventil) unterbrochen werden kann. Zum anderen verlaufen parallel zur zweiten Zubringerleitung 13 zwei Bypassleitungen 20, 21, welche die Ventile 16 und 18 kurzschliessen und über Spülventile 23 und 24 zuschaltbar sind. Die Bypassleitungen 20, 21 sind mit Blenden ausgestattet, von denen eine, die Blende 22 für die Bypassleitung 21, in Fig. 1 gezeigt ist. Mittels der Blende(n) 22 werden in den Bypassleitungen definierte Volumenströme vorgegeben, die jeweils beim Niederdruckspülen und beim Hochdruckspülen benötigt werden. Die Blende 22 in der Bypassleitung 21 hat ein relativ geringe Oeffnungsweite und erzeugt einen geringen Volumenstrom, der für den Niederdruckspülvorgang verwendet wird. Der Oeffnungsquerschnitt in der Bypassleitung 20 ist demgegenüber grösser. Der entsprechend höhere Volumenstrom findet beim Hochdruckspülvorgang Verwendung.

Eine weitere Modifikation betrifft einen zusätzlichen Auslass in der ersten Zubringerleitung 12. Dieser Auslass wird hinter der Unterbrechungsstelle 33 durch eine abgehende Drainageleitung 29 gebildet, die über ein Drainageventil 30 zu einem Leckageöltank 31 führt, in welchem der ausgespülte Brennstoff aufgefangen wird.

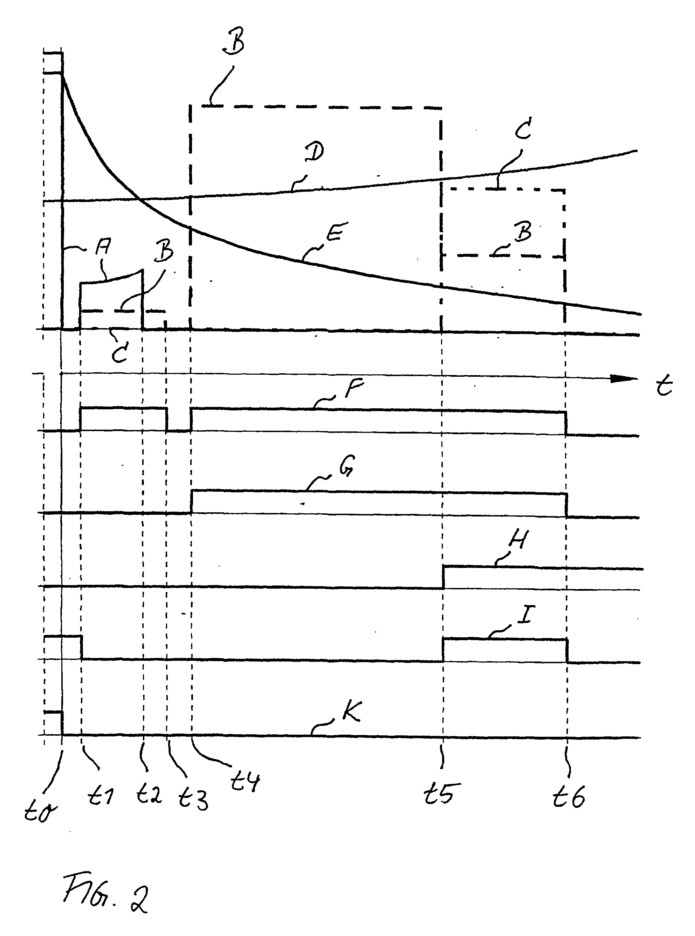

Der Ablauf des erfindungsgemässen Spülvorgangs in einer Vorrichtung nach Fig. 1 kann anhand der in Fig. 2 dargestellten Zeitablaufdiagramme erläutert werden. Die Kurve A (durchgezogen) zeigt dabei das beim Spülen auftretende Brennstoff-Luft-Verhältnis in der Brennkammer. Die Kurve B (strich-liert) zeigt den Volumenstrom des Hilfs- bzw. Spülmediums. Die Kurve C (strichpunktiert) zeigt den Volumenstrom in der Drainageleitung 29. Die Kurve D (durchgezogen) ist die Lösch-Grenzkurve für das Brennstoff-Luft-Verhältnis. Die Kurve E (durchgezogen) zeigt die Rotorgeschwindigkeit der Gasturbine. Die Kurven F, G, H, I und K zeigen die Schaltstellung (aufzu) der entsprechenden Ventile 24, 23, 30, 28 und 19.

Der Spülvorgang beginnt zum Zeitpunkt t0 mit dem Abschalten der Gasturbine, deren Rotorgeschwindigkeit daraufhin gemäss Kurve E kontinuierlich zu sinken beginnt. Gleichzeitig wird durch Schliessen des Steuerventils 19 an der Unterbrechungsstelle 33 die Zufuhr des Flüssigbrennstoffes unterbrochen (Kurve K). Möglichst sofort nach dem Abstellen der Gasturbine (Zeitpunkt t1) wird durch Oeffnen des (aus Gründen der Volumenminimierung möglichst nahe an den Brennstofflanzen angeordneten) Rückschlagventils 27 (oder Ventils) in der Verbindungsleitung 26 das unter (niedrigem) Druck stehende Spülmedium in das abgestellte Brennstoffsystem eingespeist (Kurve B zwischen den Zeitpunkten t1 und t3). Der Brennstoff in den betroffenen Leitungen wird vom Spülmedium verdrängt und entweicht in die Brennkammer, wo er entweder von der Brennkammerluft mittransportiert oder über die Drainagesysteme und in den Brennstofftank zurückgefördert wird.

Während dieses Niederdruckspülvorganges darf das Verhältnis von Brennstoff zu Luft in der Brennkammer und im Abgastrakt (Kurve A) niemals die magere Zünd-, die Lösch- bzw. die Stabilitätsgrenze (Kurve D) überschreiten, um die Gefahr von Explosionen im Abgastrakt auszuschliessen. Diese Vorgabe kann erfüllt werden, falls der Brennstoffmassenstrom klar definiert ist, sowie ein klar definierter und bekannter Luftmassenstrom in der Brennkammer vorhanden ist. Die letztgenannte Forderung wird sichergestellt entweder dadurch, dass möglichst sofort nach dem Abstellen der Gasturbine während der Auslaufphase des Rotors (Fig. 2), oder dadurch, dass mit eingeschalteter Anfahrvorrichtung bei einer definierten Ventilierungsdrehzahl gespült wird. Die Information über die tatsächliche Luftmenge ergibt sich aus dem Verdichterkennfeld, der Luftverteilung in der Gasturbine und der aktuellen Drehzahl.

Die Dauer des Niederdruckspülvorganges (t1-t2 bzw. t1-t3) ist so zu wählen, dass der Grossteil des Brennstoffes mit sehr niedrigem Impuls aus den Brennstoffdüsen entfernt wird. Lediglich geringe Restmengen von Brennstoff in den Totwasserräumen der Lanze oder als Film auf den Materialoberflächen können wegen der mit den geringen Volumenströmen verbundenen kleinen Scherkräfte zurückbleiben.

Nachdem der bei weitem grösste Teil des Brennstoffes während des Niederdruckspülens (t1-t3) aus den Brennerlanzen entfernt wurde, werden diese in einem zweiten Schritt, dem Hochdruckspülvorgang, komplett gereinigt. Dazu wird (zum Zeitpunkt t4, durch Oeffnen der Spülventile 24 und 23; Kurven F und G) der Arbeitsdruck und damit der Volumenstrom des Spülmediums soweit gesteigert, bis der Oelfilm restlos von den Düsenoberflächen entfernt und alle Totwassergebiete vollkommen vom Oel bzw. Brennstoff befreit sind (Kurve B zwischen t4 und t5).

Um ein Nachlaufen von Brennstoff aus den Zubringerleitungen 12 in schon gereinigte Lanzen oder Düsen sicher zu verhindern, wird das restliche noch mit Brennstoff gefüllte Brennstoffzufuhrsystem nach hinten in den Leckageöltank 31 entleert. Dazu wird im direkten Anschluss an den Hochdruckspülvorgang (Zeitpunkt t5), d.h. mit dem vollen Spüldruck, das Drainageventil 30 geöffnet (Kurve H) und die Drainageleitung 29 zum Leckageöltank 31 freigegeben. Gleichzeitig muss das Sektorventil 28 geöffnet werden (Kurve I). Ein Teil des Spülmediums wird dabei dazu benutzt, um dieses Oel aus den Zubringerleitungen 12 zu entfernen (Kurve C zwischen t5 und t6). Zum Zeitpunkt t6 werden die Spülventile 23 und 24 geschlossen (Kurven F und G) und der Spülvorgang ist beendet.

Bei bestimmten Gasturbinen kann das parallele Eindüsen von Wasser in die Lanzen bzw. Brenner 11 über die Zubringerleitungen 13 durch Schliessen eines oder mehrerer Ventile im Wasser- und Oelpfad, der sogenannten Sektorventile 25, 28, unterbunden werden. Dies ermöglicht es, den Spülmediumstrom bzw. Spülwasserstrom exakt zu dosieren und alles Wasser zum Spülen der betroffenen Leitungsabschnitte zu verwenden.

Wie bereits weiter oben beschrieben werden zur Einstellung der zwei definierten Volumenströme beim Spülen vorzugsweise zwei zuschaltbare Bypassleitungen 20, 21 mit entsprechenden strömungsbegrenzenden Blenden (22) verwendet. Es ist grundsätzlich aber auch möglich, statt dessen Regelventile oder Volumenspeicher auf definierten Druckniveaus oder Extrapumpen mit einstellbarem Volumenstrom zu verwenden. Als Spülmedium eignen sich neben dem bevorzugten Wasser auch inerte Gase wie z.B. N₂ oder CO₂.

Insgesamt ergibt sich mit der Erfindung ein Verfahren und ein System zur Entfernung von Rest-Brennstoff, welche sich durch folgende Vorteile auszeichnen:
- es handelt sich um ein sehr einfaches System
- es werden keine aufwendig konstruierten Brennstoffdüsen verwendet
- Verfahren und System sind sehr kostengünstig
- das System hat eine hohe Verfügbarkeit
- die Brennstoffsysteme befinden sich nach jedem Abstellen der Gasturbine in einem definiert ungefährlichen Zustand
- es besteht ein hohes Mass an Sicherheit bezüglich Nachzündungen von Brennstoff
- es besteht ein hohes Mass an Sicherheit bezüglich Verkoken von Brennstoff.

### BEZEICHNUNGSLISTE

- 10: Brennstoffsystem
- 11: Brenner
- 12,13: Zubringerleitung
- 14,15: Pumpe
- 16,17: Schnellabschaltventil
- 18,19: Steuerventil
- 20,21: Bypassleitung
- 22: Blende
- 23,24: Spülventil
- 25,28: Sektorventil
- 26: Verbindungsleitung
- 27: Rückschlagventil (oder Ventil)
- 29: Drainageleitung
- 30: Drainageventil
- 31: Leckageöltank
- 32: Einspeisepunkt
- 33: Unterbrechungsstelle
- A-K: Kurve
- t0,..,t6: Zeitpunkt

## Patentansprüche

1. Verfahren zum sicheren Entfernen von Flüssigbrennstoff aus dem Brennstoffsystem (10) einer Gasturbine nach dem Abstellen derselben, bei welchem Brennstoffsystem (10) im Normalbetrieb der Gasturbine Flüssigbrennstoff über wenigstens eine erste Zubringerleitung (12) einem Brenner (11) zugeführt und dort über Brennstoffdüsen in eine Brennkammer eingedüst wird, wobei der Flüssigbrennstoff unter Verwendung eines inerten Hilfsmediums aus dem Brennstoffsystem (10) herausgespült wird,
und wobei mit dem Abschalten der Gasturbine die Zufuhr von Flüssigbrennstoff über die erste Zubringerleitung (12) an einer Unterbrechungsstelle (33) in der ersten Zubringerleitung (12) unterbrochen wird, und dass das Hilfsmedium über eine zweite Zubringerleitung (13) an einem zwischen der Unterbrechungsstelle (33) und dem Brenner (11) befindlichen Einspeisepunkt (32) in die erste Zubringerleitung (12) eingespeist wird,
**dadurch gekennzeichnet, dass** in einem ersten Schritt mittels des am Einspeisepunkt (32) eingespeisten Hilfsmediums der zwischen Einspeisepunkt (32) und Brennstoffdüsen im Brennstoffsystem (10) befindliche Flüssigbrennstoff über die Brennstoffdüsen in die Brennkammer gespült wird, und dass in einem zweiten Schritt Flüssigbrennstoff, welcher sich in Strömungsrichtung vor dem Einspeisepunkt (32) in der ersten Zubringerleitung (12) befindet, mittels des am Einspeisepunkt (32) eingespeisten Hilfsmediums über einen separaten Auslass (29, 30, 31) aus der ersten Zubringerleitung (32) herausgespült wird.

2. Verfahren nach Anspruch 1, **dadurch gekennzeichnet, dass** innerhalb des ersten Schrittes in einem ersten Niederdruckspülvorgang der grösste Teil des Flüssigbrennstoffs in die Brennkammer entleert wird, wobei das Hilfsmedium den Flüssigbrennstoff aus den betroffenen Leitungen verdrängt und nur Restmengen des Flüssigbrennstoffes, insbesondere in Form von Oberflächenfilmen, übrigbleiben, und dass in einem zweiten Hochdruckspülvorgang die verbliebenen Restmengen des Flüssigbrennstoffes entfernt werden.

3. Verfahren nach Anspruch 2, **dadurch gekennzeichnet, dass** für den Niederdruckspülvorgang und den Hochdruckspülvorgang jeweils ein definierter Volumenstrom des Hilfsmediums verwendet wird, wobei der Volumenstrom beim Hochdruckspülvorgang grösser ist, als der Volumenstrom beim Niederdruckspülvorgang.

4. Verfahren nach Anspruch 2, **dadurch gekennzeichnet, dass** während des Niederdruckspülvorgangs Luft durch die Brennkammer geschickt und das Verhältnis von Brennstoff zu Luft in der Brennkammer unter der Lösch- bzw. mageren Zündgrenze gehalten wird.

5. Verfahren nach Anspruch 4, **dadurch gekennzeichnet, dass** zum Einspeisen der Luft in die Brennkammer die Auslaufphase der Gasturbine benutzt wird.

6. Verfahren nach Anspruch 5, **dadurch gekennzeichnet, dass** zum Einspeisen der Luft in die Brennkammer die Gasturbine mit eingeschalteter Anfahrvorrichtung, vorzugsweise bei einer definierten Ventilierungsdrehzahl, betrieben wird.

7. Verfahren nach Anspruch 1, **dadurch gekennzeichnet, dass** als inertes Hilfsmedium Wasser verwendet wird.

8. Verfahren nach Anspruch 1, **dadurch gekennzeichnet, dass** als inertes Hilfsmedium ein inertes Gas, insbesondere N2 oder CO2, verwendet wird.

9. Vorrichtung, umfassend ein Brennstoffsystem (10) für eine Gasturbine mit wenigstens einer ersten Zubringerleitung (12), über welche ein Flüssigbrennstoff zum Brenner (11) der Gasturbine geleitet und in eine Brennkammer eingedüst wird, weiterhin umfassend eine zweite Zubringerleitung (13) für ein inertes Hilfsmedium, welche an einem Einspeisepunkt (32) mit der ersten Zubringerleitung (12) verbunden ist, zur Durchführung des Verfahrens nach einem der Ansprüche 1 bis 8, **dadurch gekennzeichnet, dass** in Strömungsrichtung vor dem Einspeisepunkt (32) an der ersten Zubringerleitung (12) ein separater Auslass (29, 30, 31) angeordnet ist.

10. Vorrichtung nach Anspruch 9, **dadurch gekennzeichnet, dass** der Auslass (29; 30; 31) eine Drainageleitung (29) mit einem Drainageventil (30) umfasst, welche Drainageleitung (29) zu einem Leckageöltank (31) führt.

11. Vorrichtung nach Anspruch 9, **dadurch gekennzeichnet, dass** die zweite Zubringerleitung (13) die Zubringerleitung eines Wassereinspritzsystems ist, durch welches Wasser in die Brennkammer eingedüst werden kann, dass die zweite Zubringerleitung (13) über eine Verbindungsleitung (26) mit dem Einspeisepunkt (32) an der ersten Zubringerleitung (12) verbunden ist, und in der Verbindungsleitung (26) Mittel (27) zum Abschalten der Verbindungsleitung (26) angeordnet sind.

12. Vorrichtung nach Anspruch 11, **dadurch gekennzeichnet, dass** die Abschaltmittel ein Rückschlagventil (27) oder Ventil umfassen.

13. Vorrichtung nach Anspruch 11, **dadurch gekennzeichnet, dass** an der zweiten Zubringerleitung (13) zwei Bypassleitungen (20, 21) angeordnet sind, welche wahlweise in die zweite Zubringerleitung (13) einschaltbar sind, und jeweils Mittel (22) zur Festlegung eines definierten Volumenstromes enthalten.

## Claims

1. Method for reliably removing liquid fuel from the fuel system (10) of a gas turbine after shutting down the same, in the case of which fuel system (10) liquid fuel is fed via at least one first feeder line (12) in normal operation of the gas turbine to a burner (11) and injected there into a combustion chamber via fuel nozzles, in which the liquid fuel is flushed from the fuel system (10) by the use of an inert auxiliary medium and in which with the shutdown of the gas turbine the feed of liquid fuel via the first feeder line (12) is interrupted at an interrupt point (33) in the first feeder line (12), and that [sic] the auxiliary medium is fed into the first feeder line (12) via a second feeder line (13) at a feed-in point (32) located between the interrupt point (33) and the burner (11), **characterized in that** the liquid fuel located in the fuel system (10) between the feed-in point (32) and fuel nozzles is flushed into the combustion chamber via the fuel nozzles in a first step by means of the auxiliary medium fed in at the feed-in point (32), and **in that** liquid fuel which is located in the first feeder line (12) in front of the feed-in point (32) in the direction of flow is flushed from the first feeder line (32) [sic] via a separate outlet (29, 30, 31) in a second step by means of the auxiliary medium fed in at the feed-in point (32).

2. Method according to Claim 3, **characterized in that** the largest portion of the liquid fuel is emptied into the combustion chamber within the first step in a first low-pressure flushing operation, the auxiliary medium displacing the liquid fuel from the relevant lines and only residual amounts of the liquid fuel remaining, in particular in the form of surface films, and **in that** the remaining residual amounts of the liquid fuel are removed in a second high-pressure flushing operation.

3. Method according to Claim 2, **characterized in that** a defined flow rate of the auxiliary medium is used in each case for the low-pressure flushing operation and the high-pressure flushing operation, the flow rate being greater for the high-pressure flushing operation than for the low-pressure flushing operation.

4. Method according to Claim 2, **characterized in that** air is sent through the combustion chamber during the low-pressure flushing operation, and the ratio of fuel to air in the combustion chamber is held below the extinction limit or the lean ignition limit.

5. Method according to Claim 4, **characterized in that** the coastdown phase of the gas turbine is used for feeding the air into the combustion chamber.

6. Method according to Claim 5, **characterized in that** the gas turbine is operated with a switched-on start-up device, preferably with a defined ventilating speed, in order to feed the air into the combustion chamber.

7. Method according to Claim 1, **characterized in that** water is used as the inert auxiliary medium.

8. Method according to Claim 1, **characterized in that** an inert gas, in particular N₂ or CO₂, is used as the inert auxiliary medium.

9. Device comprising a fuel system (10) for a gas turbine having at least one first feeder line (12) via which a liquid fuel is directed to the burner (11) of the gas turbine and is injected into a combustion chamber, furthermore comprising a second feeder line (13) for an inert auxiliary medium, which is connected to the first feeder line (12) at a feed-in point (32), for carrying out the method according to one of Claims 1 to 8, **characterized in that** a separate outlet (29, 30, 31) is arranged on the first feeder line (12), upstream of the feed-in point (32) in the direction of flow.

10. Device according to Claim 9, **characterized in that** the outlet (29; 30; 31) comprises a drainage line (29) with a drainage valve (30), which drainage line (29) leads to a leakage oil tank (31).

11. Device according to Claim 9, **characterized in that** the second feeder line (13) is the feeder line of a water injection system by means of which water can be injected into the combustion chamber, **in that** the second feeder line (13) is connected via a connecting line (26) to the feed-in point (32) on the first feeder line (12), and [lacuna] means (27) for shutting down the connecting line (26) are arranged in the connecting line (26).

12. Device according to Claim 11, **characterized in that** the shutdown means comprise a check valve (27) or valve.

13. Device according to Claim 11, **characterized in that** there are arranged on the second feeder line (13) two bypass lines (20, 21) which can be optionally switched into the second feeder line (13) and in each case contain means (22) for fixing a defined flow rate.

## Revendications

1. Procédé pour l'extraction sans danger de combustible liquide hors d'un système d'alimentation (10) d'une turbine à gaz après l'arrêt de celle-ci, système d'alimentation (10) dans lequel, en marche normale de la turbine à gaz, un combustible liquide est fourni à un brûleur (11) par au moins une première conduite d'alimentation (12) et y est injecté dans une chambre de combustion par des buses d'injection de combustible, le combustible liquide étant balayé hors du système d'alimentation (10) en utilisant un fluide auxiliaire inerte, et la fourniture de combustible liquide par la première conduite d'alimentation (12) étant interrompue, lors de l'arrêt de la turbine à gaz, en un point d'interruption (33) dans la première conduite d'alimentation (12), et le fluide auxiliaire est introduit dans la première conduite d'alimentation (12) par une deuxième conduite d'alimentation (13) en un point d'introduction (32) se trouvant entre le point d'interruption (33) et le brûleur (11), **caractérisé en ce que**, dans une première étape, le combustible liquide se trouvant dans le système d'alimentation (10) entre le point d'introduction (32) et les buses d'injection de combustible est balayé dans la chambre de combustion au moyen du fluide auxiliaire introduit au point d'introduction (32) et **en ce que**, dans une deuxième étape, le combustible liquide qui se trouve dans la première conduite d'alimentation (12) avant le point d'introduction (32) dans le sens de l'écoulement, est balayé hors de la première conduite d'alimentation (32) par une autre sortie (29, 30, 31) au moyen du fluide auxiliaire introduit au point d'introduction (32).

2. Procédé selon la revendication 1, **caractérisé en ce que**, au cours de la première étape, la plus grande partie du combustible liquide est évacuée dans la chambre de combustion par une première opération de balayage à basse pression, dans laquelle le fluide auxiliaire chasse le combustible liquide hors des conduites concernées et il ne reste que des quantités résiduelles du combustible liquide, en particulier sous la forme de films superficiels, et **en ce que** les quantités résiduelles restantes du combustible liquide sont éliminées dans une deuxième opération de balayage à haute pression.

3. Procédé selon la revendication 2, **caractérisé en ce que** l'on utilise un débit volumétrique défini de fluide auxiliaire pour chaque opération de balayage à basse pression et chaque opération de balayage à haute pression, le débit volumétrique pour l'opération de balayage à haute pression étant plus grand que le débit volumétrique pour l'opération de balayage à basse pression.

4. Procédé selon la revendication 2, **caractérisé en ce que** l'on envoie de l'air à travers la chambre de combustion pendant l'opération de balayage à basse pression et **en ce que** le rapport du combustible à l'air dans la chambre de combustion est maintenu inférieur à la limite d'extinction respectivement d'allumage pauvre.

5. Procédé selon la revendication 4, **caractérisé en ce que** l'on utilise la phase de mise à l'arrêt de la turbine à gaz pour introduire l'air dans la chambre de combustion.

6. Procédé selon la revendication 5, **caractérisé en ce que**, pour l'introduction de l'air dans la chambre de combustion, on fait fonctionner la turbine à gaz avec le dispositif de démarrage enclenché, de préférence avec une vitesse de rotation de ventilation définie.

7. Procédé selon la revendication 1, **caractérisé en ce que** l'on utilise de l'eau comme fluide auxiliaire inerte.

8. Procédé selon la revendication 1, **caractérisé en ce que** l'on utilise un gaz inerte, en particulier du N₂ ou du CO₂, comme fluide auxiliaire inerte.

9. Dispositif, comprenant un système d'alimentation (10) pour une turbine à gaz avec au moins une première conduite d'alimentation (12), par laquelle un combustible liquide est amené au brûleur (11) de la turbine à gaz et est injecté dans une chambre de combustion, comprenant en outre une deuxième conduite d'alimentation (13) pour un fluide auxiliaire inerte, qui est raccordée à la première conduite d'alimentation (12) en un point d'introduction (32), pour la mise en oeuvre du procédé selon l'une quelconque des revendications 1 à 8, **caractérisé en ce qu'**une sortie séparée (29, 30, 31) est disposée dans la première conduite d'alimentation (12) avant le point d'introduction (32) dans le sens de l'écoulement.

10. Dispositif selon la revendication 9, **caractérisé en ce que** la sortie (29; 30; 31) comprend une conduite de drainage (29) avec une vanne de drainage (30), conduite de drainage (29) qui conduit à un réservoir d'huile de fuite (31).

11. Dispositif selon la revendication 9, **caractérisé en ce que** la deuxième conduite d'alimentation (13) est la conduite d'alimentation d'un système d'injection d'eau, par lequel on peut injecter de l'eau dans la chambre de combustion, **en ce que** la deuxième conduite d'alimentation (13) est raccordée à la première conduite d'alimentation (12) au point d'introduction (32) par une conduite de liaison (26), et **en ce que** des moyens (27) sont disposés dans la conduite de liaison (26) pour fermer la conduite de liaison (26).

12. Dispositif selon la revendication 11, **caractérisé en ce que** les moyens de fermeture comprennent un clapet anti-retour (27) ou une soupape.

13. Dispositif selon la revendication 11, **caractérisé en ce que** deux conduites de dérivation (20, 21) sont disposées sur la deuxième conduite d'alimentation (13), conduites de dérivation qui peuvent être connectées au choix dans la deuxième conduite d'alimentation (13) et qui comportent chacune des moyens (22) pour fixer un débit volumétrique défini.
